# EUROPÄISCHE PATENTSCHRIFT

(11) **EP 2 944 247 B1**
(45) Veröffentlichungstag und Bekanntmachung des Hinweises auf die Patenterteilung: **21.09.2016**
(21) Anmeldenummer: 14167974.6
(22) Anmeldetag: 12.05.2014
(51) Int. Cl.: A47L 9/14, B29C 65/08

(54) **Staubsaugerfilterbeutel mit hochfester Schweißnaht, Verfahren zu dessen Herstellung sowie Werkzeug und Ultraschallschweißanlage zur Herstellung einer ultrafesten Schweißnaht**
Vacuum cleaner filter bag with high strength weld seam, method for its production and tool and ultrasound welding installation for producing an extremely strong weld seam
Sac filtrant d'aspirateur doté d'un cordon de soudure très résistant, son procédé de fabrication, outil et installation de soudage par ultrasons destinée à la fabrication d'un cordon de soudure très résistant

(43) Veröffentlichungstag der Anmeldung: 18.11.2015
(73) Patentinhaber: Eurofilters N.V., 3900 Overpelt (BE)
(72) Erfinder: Schultink, Jan, 3900 Overpelt (BE); Sauer, Ralf, 3900 Overpelt (BE)
(74) Vertreter: Pfenning, Meinig & Partner mbB

(56) Entgegenhaltungen:
- WO-A1-02/43960
- WO-A1-96/32878
- DE-U1-202004 012 754
- DE-U1-202005 000 918

## Beschreibung

Die vorliegende Erfindung betrifft einen Staubsaugerfilterbeutel aus einem thermisch verschweißbaren Filtermaterial, das den abgeschlossenen Innenraum des Staubsaugerfilterbeutels bildet.

Der Innenraum ist dabei zumindest an einer Seite mittels einer gemäß der Erfindung ausgestalteten Schweißnaht verschlossen, bei der mindestens zwei Lagen des Filtermaterials miteinander verschweißt sind. Die gemäß der vorliegenden Erfindung ausgebildete Schweißnaht zeichnet sich furch eine weitaus höhere Reißfestigkeit aus, verglichen mit Schweißnähten, wie sie aus dem Stand der Technik bekannt sind. Die Erfindung betrifft zudem ein Verfahren zur Herstellung des Staubsaugerfilterbeutels, ein Werkzeug zur Herstellung der hochfesten Schweißnaht sowie eine Ultraschallschweißanlage, in der dieses Werkzeug integriert ist.

Zur Konfektionierung von Staubsaugerfilterbeuteln aus Vliesstoffen ist es üblich, die als Filtermaterial verwendeten Vliesstoffe bzw. hieraus gebildeten mehrschichtigen Vliesstofflaminate durch Ultraschallschweißen zu verbinden. Üblicherweise werden hierbei durchgehende, linienförmige Schweißnähte oder auch unterbrochene linienförmige Schweißnähte ausgebildet.

So beschreibt die WO 96/32878 A1 einen Staubsaugerfilterbeutel mit einer äußeren Stützlage, bei einer Elektretfaserlage sowie einer inneren Diffusionslage, die im Wesentlichen nicht mit der Filterlage verbunden ist, außer an den notwendigen Säumen des Staubsaugerfilterbeutels, die zur Herstellung des Filterbeutels benötigt werden.

Die WO 02/43960 A1 betrifft ein Verfahren zur Herstellung einer ein Adsorbens enthaltenden Verpackung sowie eine durch das Verfahren hergestellte Verpackung. Das Verfahren umfasst dabei das Bereitstellen einer Montagefläche der Verpackung sowie Schmelzverbinden der Montageoberfläche mittels Ultraschallverschweißung, um eine Vielzahl von eingedrückten harten versiegelten Teilflächen und erhabenen Oberflächen auf der Montagefläche zu erhalten.

Aus der DE 20 2004 012 754 U1 ist ein Sammelbeutel aus einem Vliesmaterial mit einem angeklebten Geräte-Anschlussflansch aus einem Karton-Material, insbesondere Staubsaugerbeutel, bekannt, der sich durch eine Klebeverbindung zwischen Beutel und Flansch auszeichnet, wobei die Klebeverbindung einen vor dem eigentlichen Verkleben auf den Flansch und/oder den Beutel aufgebrachten und angetrockneten, ultraschallaktivierbaren Klebstoff umfasst, und durch Beaufschlagung des Klebstoffs mittels Ultraschall zu dessen Reaktivierung bei in Kontakt gebrachtem Beutel und Flansch hergestellt ist.

Die DE 20 2005 000 918 U1 betrifft einen Staubfilterbeutel für Staubsauger mit einer aus schweißbarem flexiblen Filtermaterial bestehenden Wandung, die von einer eine Einlassöffnung enthaltenden Vorderwand, einer zur Vorderhand im Wesentlichen parallelen Rückwand und zwei an einander entgegengesetzten Seiten freien Wänden jeweils in Gestalt einer seitlich zwischen der Vorderwand und der Rückwand eingefalteten, von zwei Faltenschenkeln gebildeten Seitenfalte gebildet wird, wobei der Staubfilterbeutel eine zumindest im Wesentlichen rechteckige Gestalt aufweist und an seinen beiden Längsenden durch Schweißnähte verschlossen ist.

Nach wie vor stellen die zuvor ausgebildeten Schweißnähte allerdings eine permanente Schwachstelle derart konfektionierten Staubsaugerfilterbeutel dar. Insbesondere bei bereits hohem Füllungsgrad mit Schmutzpartikeln (Verstopfungsgrad) der Staubsaugerfilterbeutel kommt es dabei zum Aufplatzen der Schweißnaht bzw. zum Abriss des Vliesstoffmaterials an der Schweißnaht, so dass der Staubsaugerfilterbeutel beschädigt oder zerstört wird und bereits enthaltener Schmutz unkontrolliert aus dem Staubsaugerfilterbeutel austritt. Beim Ultraschallschweißen von Vliesstoffen mit einer flächenbezogenen Masse von weniger als 200 g/m² wird dieses Problem heute recht gut beherrscht. Schwierigkeiten gibt es insbesondere, wenn Vliesstoffe mit einer flächenbezogenen Masse von mehr als 200 g/m² verschweißt werden sollen oder wenn die Schweißnaht mehr als zwei Filtermateriallagen verbinden muss (z.B. im Bereich einer Seitenfalte) und die flächenbezogene Masse der z.B. vier Vliesstofflagen dann in Summe bei über 400 g/m² liegt.

Aufgabe der vorliegenden Erfindung ist es, eine Schweißnaht in einem aus thermisch verschweißbaren Materialien, insbesondere aus Vliesstoffmaterialien gebildeten Staubsaugerfilterbeutel bereitzustellen, die eine verbesserte Reißfestigkeit (Höchstzugkraft) aufweist, so dass die zuvor erwähnten Problematiken beim erfindungsgemäßen Staubsaugerfilterbeutel unterbleiben. Die vorliegende Erfindung stellt sich somit die Aufgabe, einen entsprechenden Staubsaugerfilterbeutel mit hochfester Schweißnaht anzugeben. Ebenso ist es Aufgabe der vorliegenden Erfindung, ein Verfahren zur Herstellung eines entsprechenden Staubsaugerfilterbeutels sowie ein Werkzeug, das sich im zuvor genannten Verfahren einsetzen lässt sowie eine Ultraschallschweißanlage, die dieses Werkzeug beinhaltet, anzugeben.

Diese Aufgabe wird hinsichtlich eines Staubsaugerfilterbeutels mit einer speziell ausgebildeten Schweißnaht mit den Merkmalen des Patentanspruchs 1, bezüglich eines Verfahrens zur Herstellung des erfindungsgemäßen Staubsaugerfilterbeutels mit den Merkmalen des Patentanspruchs 12, hinsichtlich eines Werkzeugs zur Ausbildung der Schweißnaht mit den Merkmalen des Patentanspruchs 14 sowie hinsichtlich einer Ultraschallschweißanlage mit den Merkmalen des Patentanspruchs 24 gelöst. Die jeweiligen abhängigen Patentansprüche stellen dabei vorteilhafte Weiterbildungen dar.

Die vorliegende Erfindung betrifft somit einen Staubsaugerfilterbeutel aus einem thermisch verschweißbaren Filtermaterial, wobei durch das Filtermaterial ein abgeschlossener Innenraum des Staubsaugerfilterbeutels definiert wird. Der erfindungsgemäße Staubsaugerfilterbeutel umfasst dabei mindestens eine linienförmig verlaufende Schweißnaht, mittels der der Innenraum des Staubsaugerfilterbeutels zumindest an einer Seite gegenüber der Umgebung abgeschlossen ist. Die Schweißnaht verbindet dabei zumindest zwei Lagen des Filtermaterials miteinander, wobei die Schweißnaht in Richtung des linienförmigen Verlaufs alternierend verschweißte und unverschweißte Bereiche der zumindest zwei Lagen aufweist. Erfindungswesentlich ist dabei, dass die verschweißten Bereiche eine in Richtung des linienförmigen Verlaufs gemessene Dimensionierung (Länge der verschweißten Bereiche) von 1,0 mm bis 10,0 mm, eine lotrecht zum linienförmigen Verlauf gemessene Dimensionierung von 1,3 mm bis 10,0 mm und die unverschweißten Bereiche eine in Richtung des linienförmigen Verlaufs gemessene Dimensionierung (Länge der unverschweißten Bereiche) von > 1,0 mm bis 5,0 mm aufweisen.

Der Staubsaugerfilterbeutel gemäß der vorliegenden Erfindung zeichnet sich dadurch aus, dass er durch ein thermisch verschweißbares Filtermaterial, z.B. aus Vliesstoffmaterialien gebildet ist. Der Staubsaugerfilterbeutel weist dabei zumindest eine Schweißnaht auf, bei der mindestens zwei Lagen des thermisch verschweißbaren Filtermaterials miteinander verschweißt sind, so dass ein Innenraum des Staubsaugerfilterbeutels ausgebildet ist, in den das Staubmaterial aufgenommen wird. Der Innenraum des Staubsaugerfilterbeutels ist dabei gegenüber dem Außenraum abgetrennt. Zusätzlich ist eine Eintrittsöffnung für zu reinigende Luft vorhanden. Die Schweißnaht ist dabei linienförmig ausgebildet und kann beispielsweise geradlinig aber auch kurvig verlaufen. In Richtung des linienförmigen Verlaufs weisen die Schweißnähte alternierend verschweißte und unverschweißte Bereiche auf.

Insbesondere stellt die Schweißnaht eine randseitig umlaufende Schweißnaht des Staubsaugerfilterbeutels dar.

Überraschenderweise hat sich nunmehr herausgestellt, dass durch das Einbringen von relativ langen unverschweißten Bereichen im Bereich der Schweißnaht mit einer Länge von > 1,0 mm bis 5,0 mm, d.h. das Einfügen von Unterbrechungen von mehr als 1,0 mm Länge in die Schweißnaht, eine höhere Reißfestigkeit der Schweißnaht verglichen mit aus dem Stand der Technik bekannten Schweißnähten resultiert, so dass der Staubsaugerfilterbeutel auch bei hohen mechanischen Beanspruchungen nicht im Bereich der Schweißnaht aufplatzt. Zudem überrascht, dass trotz der relativ langen unverschweißten Bereiche die Dichtigkeit des Filterbeutels nicht negativ beeinflusst wird, also der Abscheidegrad genau so gut ist wie bei einem Filterbeutel mit durchgehend verschweißter Schweißnaht.

Gemäß einer bevorzugten Ausführungsform weisen die unverschweißten Bereiche eine in Richtung des linienförmigen Verlaufs gemessene Dimensionierung von 1,2 mm bis 3,0 mm, besonders bevorzugt von 1,4 mm bis 2,5 mm auf.

Alternativ oder zusätzlich hierzu ist es vorteilhaft, wenn die verschweißten Bereiche eine in Richtung des linienförmigen Verlaufs gemessene Dimensionierung von 1,5 mm bis 7,5 mm, bevorzugt von 1,75 mm bis 5,0 mm, besonders bevorzugt von 2,0 mm bis 3,5 mm aufweisen.

Vorteilhaft ist weiter, dass in Richtung des linienförmigen Verlaufs der Schweißnaht die Dimensionierung der unverschweißten Bereiche kleiner ist als die Dimensionierung der verschweißten Bereiche, d. h. es ist bevorzugt wenn die verschweißten Bereiche länger ausgebildet sind als die unverschweißten Bereiche.

Insbesondere ist die alternierende Anordnung der verschweißten und unverschweißten Bereiche äquidistant, d.h. die verschweißten und unverschweißten Bereiche weisen stets die gleiche Länge auf bzw. werden mit derselben Periode in Richtung des Längsverlaufes der Schweißnaht wiederholt.

Lotrecht zum linienförmigen Verlauf weist die Schweißnaht eine Dimensionierung (Breite der Schweißnaht) von 1,3 mm bis 10,0 mm, bevorzugt von 1,3 mm bis 5,0 mm, besonders bevorzugt von 1,4 mm bis 3,0 mm auf, d.h. die verschweißten Bereiche haben die zuvor genannte bevorzugte Breite.

Die verschweißten Bereiche sind dabei insbesondere im Wesentlichen rechteckig oder rechteckig ausgebildet. Hierunter fällt beispielsweise eine quadratische Ausführungsform, besonders vorteilhaft sind jedoch Ausführungsformen, bei denen die Dimensionierung des Rechtecks in Längsrichtung der Schweißnaht größer ist als in der lotrecht zum linienförmigen Verlauf vorhandenen Dimensionierung (rechteckige Ausbildung der verschweißten Bereiche). Denkbar sind allerdings auch hiervon abweichende geometrische Ausgestaltungen der verschweißten Bereiche, z.B. runde, kreisförmige, elliptische, ovale, sternchen- oder kreuzförmige Ausgestaltungen der verschweißten Bereiche. In diesem Fall wird als Länge bzw. Breite der verschweißten Bereiche die jeweilige maximale Ausdehnung der verschweißten Bereiche in Verlaufsrichtung der linienförmigen Schweißnaht bzw. in lotrechter Richtung hierzu angenommen.

Weiter bevorzugt ist es, wenn jede Lage des Filtermaterials ein ein- oder mehrschichtiges Vliesstoffmaterial ist, bevorzugt mit einem Flächengewicht von mindestens 150 g/m², bevorzugt mindestens 200 g/m², weiter bevorzugt mindestens 250 g/m², insbesondere mindestens 300 g/m². Das Gesamtflächengewicht des zu verschweißenden Materials hängt nun vom Flächengewicht des Filtermediums und der Anzahl übereinander angeordneter Lagen ab.

Hierbei ist es möglich, dass das Filtermaterial ein einschichtiges Vliesstoffmaterial ist und somit aus lediglich einer Schicht eines Vliesstoffes gebildet ist. Bevorzugt sind die Filtermaterialien jedoch mehrschichtige Vliesstoffmaterialien, so dass mindestens 3, bevorzugt 4 bis 8, insbesondere 4 oder 5 Schichten eines Vliesstoffmaterials vorhanden sind. Zu diesen Filtermaterialien zählen auch die Filtermaterialien, wie sie für den Staubsaugerfilterbeutel gemäß der EP 1 795 247 A1 beschrieben sind. Sämtliche Ausführungen dieser Patentanmeldung hinsichtlich der eingesetzten Filtermaterialien werden auch zum Gegenstand der vorliegenden Patentanmeldung gemacht.

Der Staubsaugerfilterbeutel gemäß der vorliegenden Erfindung kann dabei Wandungen aufweisen, die aus einer oder mehreren, z. B. zwei Lagen eines Filtermaterials besteht, wobei das Filtermaterial selbst ein ein- oder mehrschichtiges Vliesstoffmaterial darstellen kann.

Die Schweißnaht gemäß der vorliegenden Erfindung weist eine hohe Festigkeit auf. Die Zerreißkraft wird dabei gemäß DIN EN 29073-3 bestimmt. Die Ermittlung der Höchstzugkraft wird dort eindeutig definiert. Die Norm bezieht sich allgemein auf Vliesstoffe. Die zu prüfende Schweißnaht wird zur Prüfung mittig zwischen den Backen der Zugprüfmaschine eingespannt.Beim Zerreißen eines Prüflings bei dem 4 Lagen eines Vliestoffes mit einer Schweißnaht miteinander verbunden worden sind werden jeweils 2 Lagen in die eine Backe eingespannt werden und 2 Lagen in die andere Backe.

Diese Zerreißkraft weist dabei bevorzugt mindestens 30 N, bevorzugt mindestens 50 N, besonders bevorzugt mindestens 80 N auf (Bei einer Einspannbreite nach Norm von 5 cm).

Gemäß einer ersten bevorzugten Ausführungsform ist der Staubsaugerfilterbeutel in Form eines Flachbeutels ausgebildet. Hierbei sind mindestens zwei Lagen des Filtermaterials randseitig umlaufend miteinander verschweißt, wobei die Verschweißung zumindest bereichsweise, bevorzugt komplett als Schweißnaht wie voranstehend beschrieben ausgebildet ist. Der Flachbeutel weist dabei eine Vorder- und eine Rückseite auf, wobei sowohl die Vorder- als auch die Rückseite des Flachbeutels jeweils zumindest aus einer Lage eines Filtermaterials gebildet ist. Jede Seite des Flachbeutels, d. h. z. B. Vorder- und Rückseite können dabei z. B. auch jeweils aus zwei Lagen eines Filtermaterials gebildet sein. Jede Lage des Filtermaterials kann für sich genommen wiederum aus ein- oder mehrschichtigen Vliesstoffmaterialien gebildet sein.

Ebenso ist es möglich, dass der Staubsaugerfilterbeutel gemäß der vorliegenden Erfindung die Form eines Seitenfaltenbeutels aufweist. Der Seitenfaltbeutel entspricht dabei im wesentlichen dem zuvor beschriebenen Flachbeutel. Auch der Seitenfaltbeutel weist eine Vorder- und Rückseite auf, die wie voranstehend beschrieben ausgestaltet sein kann. Im Gegensatz zum Flachbeutel ist der Seitenfaltbeutel auf zwei gegenüberliegenden Seiten eingeschlagen und weist somit Seitenfalten auf. An den Stirnseiten ist der Seitenfaltbeutel wie der Flachbeutel ausgestaltet. Bei einem derartigen Seitenfaltenbeutel sind somit zwei Längs- und zwei Querseiten vorhanden, wobei mindestens zwei Lagen des Filtermaterials längsseitig miteinander verschweißt und in den Staubsaugerfilterbeutel eingeschlagen und querseitig miteinander verschweißt sind, wobei zumindest die querseiteigen Schweißnähte vorzugsweise sämtliche Schweißnähte, wie voranstehend beschrieben, ausgebildet sind.

Alternativ und ebenso bevorzugt ist es auch möglich, dass der Staubsaugerfilterbeutel gemäß der vorliegenden Erfindung die Form eines 3D-Beutels oder Block- oder Klotzbodenbeutels aufweist, wobei mindestens zwei Lagen des Filtermaterials mit einer in einem der vorhergehenden Ansprüche definierten Schweißnaht verschweißt sind.

Die vorliegende Erfindung betrifft ebenso ein Verfahren zur Herstellung eines zuvor beschriebenen Staubsaugerfilterbeutels, bei dem mindestens eine linienförmig verlaufende Schweißnaht durch thermisches Verschweißen, insbesondere durch Ultraschallverschweißen zumindest zweier Lagen des Filtermaterials erzeugt wird, wobei die Schweißnaht in Richtung des linienförmigen Verlaufs alternierend verschweißte und unverschweißte Bereiche der zumindest zwei Lagen aufweist, wobei die verschweißten Bereiche eine in Richtung des linienförmigen Verlaufs gemessene Dimensionierung (Länge der verschweißten Bereiche) von 1,0 mm bis 10,0 mm, eine lotrecht zum linienförmigen Verlauf gemessene Dimensionierung von 1,3 mm bis 10,0 mm und die unverschweißten Bereiche eine in Richtung des linienförmigen Verlaufs gemessene Dimensionierung (Länge der verschweißten Bereiche) von > 1,0 mm bis 5,0 mm aufweisen.

Mit dem erfindungsgemäßen Verfahren kann auf einfache Art und Weise eine Verbindung der mindestens zwei Lagen des thermisch verschweißbaren Filtermaterials, insbesondere der Vliesstofflagen des Staubsaugerfilterbeutels bewerkstelligt werden, so dass mit einfachsten Mitteln eine äußerst reißfeste Schweißnaht entsteht.

Gemäß einer besonders bevorzugten Ausführungsform wird die linienförmige Schweißnaht durch Ultraschallverschweißen erzeugt, wobei ein Werkzeug eingesetzt wird, das einen Grundkörper sowie mindestens eine erste sich in eine x-Richtung längs erstreckende, in eine y-Richtung eine Breite aufweisende und in eine z-Richtung erhabene Leiste mit in z-Richtung abschließender planer Arbeitsfläche, die eine Mehrzahl von in y-Richtung parallel verlaufenden und ausgehend von der Arbeitsfläche in z-Richtung vertieften Einkerbungen, die eine Mehrzahl von Schweißflächen definiert, aufweist. Hierbei beträgt die Längsdimensionierung der Einkerbungen in x-Richtung von > 1,0 mm bis 5,0 mm und die Längsdimensionierung der Schweißflächen in x-Richtung 1,0 mm bis 10,0 mm. Beim erfindungsgemäßen Verfahren wird zudem ein Gegenstück zum Werkzeug eingesetzt, das beim Schweißvorgang über der ersten Leiste angeordnet ist. Zur Erzeugung der Schweißnaht werden die mindestens zwei Lagen des Filtermaterials zwischen Werkzeug und Gegenstück angeordnet, anschließend erfolgt ein Verpressen der Lagen des Filtermaterials, indem Gegenstück und Werkzeug aufeinander zubewegt werden wobei die zu verschweißenden Lagen des Filtermaterials aneinander angepresst werden. Zum Verschweißen wird Ultraschall in das Gegenstück und/oder in das Werkzeug eingekoppelt.

Als Gegenstück kann beispielsweise eine plan ausgebildete Metallleiste eingesetzt werden, die hinsichtlich ihrer Breite beispielsweise die gleiche Dimensionierung aufweisen kann wie die Breite der Schweißflächen. Ebenso ist es denkbar, dass das Gegenstück eine Arbeitsoberfläche aufweist, die spiegelbildlich zur Arbeitsfläche des Werkzeugs ausgebildet ist, d.h. ebenso erhabene Schweißflächen und dazwischen ausgebildete Einkerbungen aufweist. In diesem Fall ist das Gegenstück so zum Werkzeug anzuordnen, dass die Schweißflächen des Werkzeugs übereinander zum Liegen kommen. Entsprechendes gilt für die Einkerbungen.

Beim Verpressen der Lagen des Filtermaterials findet somit eine Komprimierung des Filtermaterials im Bereich der erhabenen Schweißflächen statt, während das weiche Filtermaterial in die Einkerbungen eindringen kann. Wenn in diesem Zustand Ultraschall in das Werkzeug und/oder das Gegenstück eingekoppelt wird, findet im verpressten Bereich des Filtermaterials, d.h. im Bereich der Schweißflächen ein kurzzeitiges Aufschmelzen des Filtermaterials statt, so dass in diesem Bereich die verschweißten Bereiche der Schweißnaht entstehen. Im Bereich der Einkerbungen, d.h. in den Bereichen, in denen keine Verpressung des Filtermaterials gegeben ist, findet keine Verschweißung statt.

Die vorliegende Erfindung betrifft zudem ein Werkzeug für eine Ultraschallschweißanlage umfassend einen Grundkörper sowie mindestens eine erste sich in eine x-Richtung längs erstreckende, in eine y-Richtung eine Breite aufweisende und in eine z-Richtung erhabene Leiste mit in z-Richtung abschließender planer Arbeitsfläche, die eine Mehrzahl von in y-Richtung parallel verlaufenden und ausgehend von der Arbeitsfläche in z-Richtung vertieften Einkerbungen, die eine Mehrzahl von Schweißflächen definiert, aufweist, wobei die Längsdimensionierung der Einkerbungen in x-Richtung von > 1,0 mm bis 10,0 mm, die Längsdimensionierung der Schweißflächen in x-Richtung 1,0 mm bis 10,0 mm und die Breite der Schweißflächen in y-Richtung 1,3 mm bis 10,0 mm beträgt. Mit diesem Werkzeug lässt sich das zuvor beschriebene erfindungsgemäße Verfahren durchführen und die eingangs beschriebenen erfindungsgemäßen Staubsaugerfilterbeutel durch Verschweißen mindestens zweier Lagen von Filtermaterialien herstellen.

Die x-, y- und z-Koordinaten bzw. -Richtungen bezeichnen hierbei die Achsen eines dreidimensionalen kartesischen Koordinatensystems.

Bevorzugt beim Werkzeug ist hierbei, dass die Längsdimensionierung der Einkerbungen in x-Richtung von 1,2 mm bis 3,0 mm, besonders bevorzugt von 1,4 mm bis 2,5.

Alternativ oder zusätzlich zu der zuvor genannten Ausführungsform ist es vorteilhaft, wenn die Längsdimensionierung der Schweißflächen in x-Richtung von 1,5 mm bis 7,5 mm, bevorzugt von 1,75 mm bis 5,0 mm, besonders bevorzugt von 2,0 mm bis 3,5 mm beträgt.

Ebenso ist es vorteilhaft, dass in x-Richtung die Längsdimensionierung der Schweißflächen größer ist als die Längsdimensionierung der Einkerbungen.

Insbesondere sind die Einkerbungen in x-Richtung äquidistant angeordnet.

Weiter bevorzugt ist hierbei, dass die Breite der Schweißflächen in y-Richtung von 1,3 mm bis 5,0 mm, besonders bevorzugt von 1,4 mm bis 3,0 mm beträgt.

Die Schweißflächen des Werkzeugs weisen vorteilhafterweise einen im Wesentlichen rechteckigen oder rechteckigen Umriss auf.

Zudem ist es möglich, dass die Einkerbungen in Projektion auf eine xz-Ebene ein dreieckiges oder trapezoidales Profil aufweisen, wobei bevorzugt die das Dreiecksprofil oder das trapezoidale Profil bildenden Flanken der Einkerbungen einen Winkel α von 30 ° bis 120 °, bevorzugt 40 ° bis 100 ° zueinander aufweisen.

Gemäß einer besonders bevorzugten Ausführungsform weist der Grundkörper mindestens eine zweite sich in eine x-Richtung längs erstreckende, in eine y-Richtung eine Breite aufweisende und in eine z-Richtung erhabene Leiste mit in z-Richtung abschließender planer Arbeitsfläche, die eine Mehrzahl von in y-Richtung parallel verlaufenden und ausgehend von der Arbeitsfläche in z-Richtung vertieften Einkerbungen, die eine Mehrzahl von Schweißflächen definiert, auf. Hierbei beträgt die Längsdimensionierung der Einkerbungen in x-Richtung von > 1,0 mm bis 5,0 mm und die Längsdimensionierung der Schweißflächen in x-Richtung 1,0 mm bis 10,0 mm. Die mindestens eine zweite Leiste ist in x-Richtung parallel und in einem Abstand zur mindestens einen ersten Leiste angeordnet. Bevorzugt weist die Arbeitsfläche der mindestens einen zweiten Leiste die gleiche Dimensionierung d. h. die gleiche Höhe in z-Richtung auf wie die der mindestens eine erste Leiste.

Insbesondere ist die mindestens eine zweite Leiste identisch ausgestaltet wie die erste Leiste, d. h. die Einkerbungen und Arbeitsflächen weisen jeweils die gleiche Dimensionierung und den gleichen Abstand zueinander auf.

Mit einem wie voranstehend beschriebenen bevorzugt ausgebildeten Werkzeug lassen sich somit beispielsweise gleichzeitig zwei Schweißnähte durch Verschweißen mehrerer Lagen von Filtermaterialien erzeugen. Diese Schweißnähte verlaufen bevorzugt parallel oder im wesentlichen parallel zueinander. Dies ist insbesondere dann von Vorteil, wenn eine kontinuierliche Herstellung von Filterbeuteln aus endlos ausgebildeten Bahnen von Filtermaterialien erzeugt wird. Durch die gleichzeitige Einbringung von zwei Schweißnähten kann somit mit der ersten Leiste eine abschließende Schweißnaht eines ersten Staubsaugerfilterbeutels, mit der zweiten Leiste eine weitere abschließende Schweißnaht eines zweiten Staubsaugerfilterbeutels erzeugt werden. Nach erfolgtem Schweißvorgang kann die nunmehr stellenweise verschweißte Bahn aus mehreren Lagen des Filtermaterials im Bereich des Abstandes zwischen den beiden Leisten abgelängt werden, so dass zwei separate Filterbeutel entstehen.

Bei der zuvor genannten bevorzugten Ausführungsform kann es ferner vorgesehen sein, dass zwischen der ersten Leiste und der zweiten Leiste mindestens eine dritte in eine z-Richtung erhabene Leiste mit in z-Richtung abschließender planer Arbeitsfläche mit in z-Richtung verlaufenden Aussparungen, die eine Mehrzahl von Schweißflächen definiert, angeordnet ist, wobei die Arbeitsfläche der mindestens einen dritten Leiste die gleiche Dimensionierung, d. h. Höhe in z-Richtung aufweist wie die der mindestens eine erste Leiste.

Mit dieser dritten Leiste kann ein weiteres Schweißprofil mit verschweißten und unverschweißten Bereichen in einen Staubsaugerfilterbeutel eingebracht werden. Wie bereits zuvor beschrieben, ist dieses Schweißprofil zwischen den beiden entstehenden Schweißnähten, die jeweils einen Staubsaugerfilterbeutel abschließen, eingebracht. Das mit dieser dritten Leiste entstehende Schweißprofil liegt somit außerhalb des Innenraums des Staubsaugerfilterbeutels. Dieses Schweißprofil dient dazu, Bestandteile des Filtermaterials zu verfestigen, um zu verhindern, dass das Filtermaterial ausfranst oder aus dem Staubsaugerfilterbeutel austreten kann. Insbesondere bei Einsatz von mehrschichtigen Vließstoffmaterialien oder Faservliesmaterialien im Sinne der EP 1 795 247 A1 kann es vorkommen, dass einzelne Fasern des Vliesstoffmaterials bzw. des Faservliesmaterials an der Seitenkante des Staubsaugerfilterbeutels herausstehen und bei Handhabung des Staubsaugerfilterbeutels aus dem Bereich des Staubsaugerfilterbeutels herausgezogen werden, wodurch gegebenenfalls das Filtermaterial im Bereich der Schweißnaht beschädigt werden kann. Durch diese dritte Leiste und entsprechende Einbringung eines Schweißmusters außerhalb der Schweißnaht werden diese Einzelfasern der entsprechenden Filtermaterialien zusätzlich fixiert und somit gesichert. Wird ein wie zuvorstehend beschriebenes kontinuierliches Verfahren zur Herstellung der Staubsaugerfilterbeutel durchgeführt (d.h. es werden quasi endlose Bahnen des Filtermaterials eingesetzt), ist es bevorzugt, wenn das Ablängen der dann verschweißten Bahnen des Filtermaterials im Bereich dieser dritten Leiste erfolgt. Das Ablängen erfolgt besonders bevorzugt spiegelsymmetrisch zum Verlauf der beiden äußeren Leisten.

Zudem betrifft die vorliegende Erfindung eine Ultraschallschweißanlage, die ein Werkzeug wie voranstehend beschrieben aufweist.

Gemäß einer ersten Ausführungsform ist das Werkzeug dabei als Amboss ausgebildet. In diesem Falle weist die Ultraschallschweißanlage als Gegenstück zum Werkzeug mindestens eine Sonotrode mit insbesondere durchgängig ausgebildeter Arbeitsoberfläche auf. Die Sonotrode und das als Amboss fungierende Werkzeug sind dabei beweglich zueinander angeordnet, so dass beim Schweißvorgang die Sonotrode und die mindestens eine erste Leiste übereinander angeordnet sind. Für den Fall, dass das Werkzeug mehrere Leistungen aufweist, umfasst die Ultraschallschweißanlage eine der Anzahl der Leisten entsprechende Anzahl an Sonotroden, die jeweils einer Leiste zuordnet sind, so dass beim Schweißvorgang die mindestens eine zweite Leiste und ggf. die mindestens eine dritte Leiste mit der jeweiligen Sonotrode übereinander angeordnet sind.

Gemäß einer weiteren alternativen Ausführungsform hierzu ist das Werkzeug dabei als Sonotrode ausgebildet und wird beim Schweißvorgang als solche betrieben. In diesem Falle umfasst die Ultraschallschweißanlage als Gegenstück zum Werkzeug mindestens einen Amboss mit z. B. durchgängig ausgebildeter Arbeitsoberfläche. Hierbei sind Amboss und Werkzeug beweglich so zueinander angeordnet, dass beim Schweißvorgang der Amboss und die mindestens eine erste Leiste übereinander angeordnet sind, ggf. die mindestens eine zweite Leiste und ggf. die mindestens eine dritte Leiste übereinander angeordnet sind.

Für den Fall, dass das Werkzeug mehrere Leistungen aufweist, umfasst die Ultraschallschweißanlage eine der Anzahl der Leisten entsprechende Anzahl an Ambossen, die jeweils einer Leiste zuordnet sind, so dass beim Schweißvorgang die mindestens eine zweite Leiste und ggf. die mindestens eine dritte Leiste mit dem jeweiligen Ambossen übereinander angeordnet sind.

Die vorliegende Erfindung wird anhand der nachfolgend beigefügten Figuren näher beschrieben, ohne die Erfindung auf die speziell hergestellten Ausführungsformen zu beschränken.
Figur 1 zeigt die Aufsicht auf die Arbeitsoberfläche eines erfindungsgemäßen Werkzeugs in z-Richtung.
Figur 2 zeigt die Seitenansicht eines erfindungsgemäßen Werkzeugs in y-Richtung.
Figur 3 zeigt die Aufsicht auf ein erfindungsgemäßes Werkzeug in x-Richtung.
Figur 4 zeigt die komplette Ansicht eines erfindungsgemäßen Werkzeugs in y-Richtung.
Figur 5 zeigt einen erfindungsgemäßen Staubsaugerfilterbeutel, der als Flachbeutel ausgestaltet ist.
Figur 6 zeigt einen erfindungsgemäßen Staubsaugerfilterbeutel, der als Seitenbeutel ausgestaltet ist.

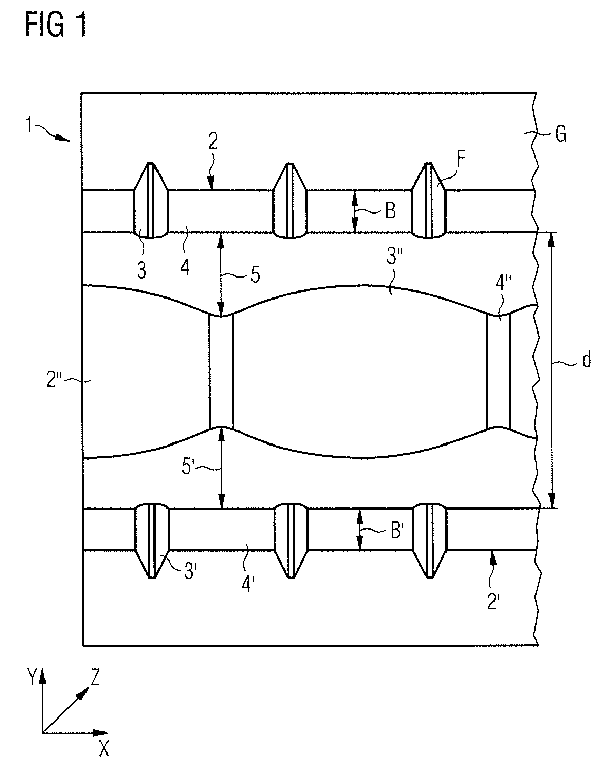

Figur 1 zeigt einen Ausschnitt einer Aufsicht auf einen Ausschnitt der Arbeitsoberfläche eines erfindungsgemäßen Werkzeugs 1. Das Werkzeug 1 weist dabei einen Grundkörper G auf sowie zwei Leisten 2 und 2', die in z-Richtung aus dem Grundkörper G herausragen. Die Leisten 2 und 2' verlaufen dabei in x-Richtung. Die Leisten 2 bzw. 2' weisen dabei Einkerbungen 3 bzw. 3' auf, hierbei ist die Oberfläche der Leisten 2 bzw. 2' in z-Richtung nach unten eingekerbt und ausgespart. Durch die Einkerbungen 3 und 3' entstehen dabei die erhabenen Schweißflächen 4 bzw. 4', die in z-Richtung aus der Arbeitsoberfläche des Werkzeugs 1 herausragen.

Die Einkerbungen 3 und 3' sind dabei in x-Richtung äquidistant angeordnet, so dass die dabei entstehenden Schweißflächen 4 bzw. 4' gleichlang (und ebenso gleich breit) ausgebildet sind. Die beiden Leisten 2 und 2' des Werkzeugs 1 sind dabei bezüglich einer x-Achse spiegelsymmetrisch ausgebildet. Der minimale Abstand dieser beiden Leisten d ist über die gesamte x-Dimensionierung des Werkzeugs 1 gleich ausgebildet, so dass die Leisten 2 und 2' parallel zueinander verlaufen.

In x-Richtung beträgt die Länge der Schweißflächen 4 und 4' dabei zwischen 1,0 und 10 mm, während die Länge der Einkerbungen in x-Richtung 3 bzw. 3' zwischen > 10mm bis 10 mm beträgt.

Die Schweißflächen 4 bzw. 4' der jeweiligen Leisten 2 bzw. 2' weisen dabei eine Breite B bzw. B' auf, d.h. eine Dimensionierung in y-Richtung.

Zwischen den Leisten 2 und 2' ist dabei eine weitere Leiste 2" angeordnet, die ebenso in Z-Richtung erhabene Schweißflächen 4" aufweist. Die jeweiligen Schweißflächen 4" sind dabei durch Einkerbungen 3" voneinander getrennt. Die Leiste 2" weist verglichen mit den Leisten 2 bzw. 2' lediglich halb so viele Einkerbungen auf, so dass die Schweißflächen 4" in x-Richtung lediglich halb so oft auftreten, wie in den Leisten 2 bzw. 2'.

An den Stellen, an denen in x-Richtung eine Schweißfläche 4" mit einer Schweißfläche 4 bzw. 4' koinzidiert, sind diese durch Einkerbungen 5 bzw. 5' voneinander getrennt.

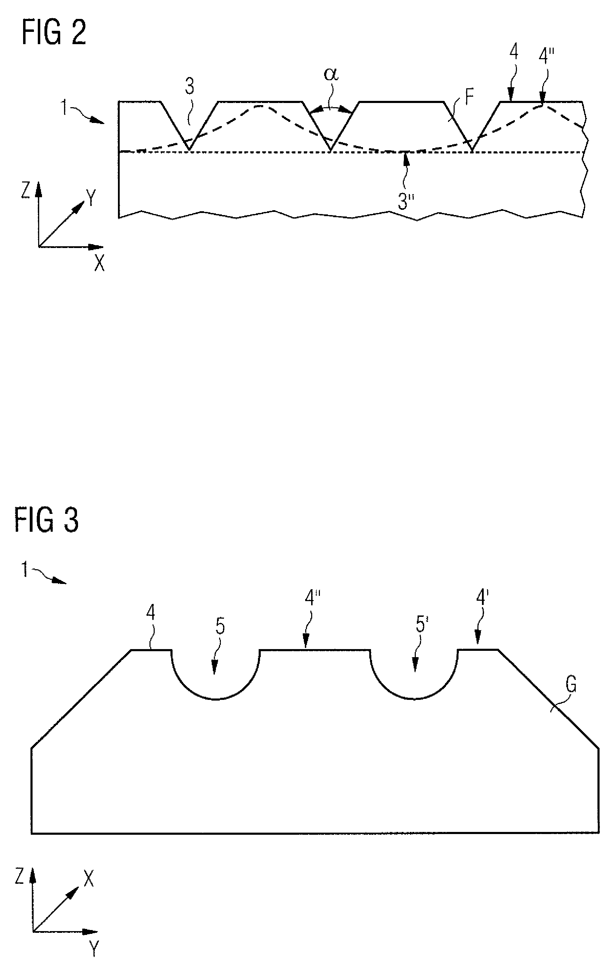

Während die Einkerbungen 3 bzw. 3' der Leiste 2 bzw. 2' beispielsweise dreiecksförmig ausgebildet sein können (siehe hierzu auch Figur 2), so dass die Einkerbungen entsprechende Flanken F aufweisen, können die Einkerbungen 3" bzw. die zwischen den Leisten vorhandenen Einkerbungen 5 bzw. 5' auch anders ausgestaltet sein und beispielsweise keine Kanten aufweisen, beispielsweise rundes Profil aufweisen (siehe hierzu auch Figur 3).

Figur 2 zeigt eine Aufsicht auf die xz-Ebene des Werkzeugs 1. Erkennbar sind hierbei die regelmäßig angeordneten dreieckig ausgebildeten Einkerbungen 3, die jeweils Flanken F aufweisen. Die Flanken sind dabei in einem Winkel α zueinander angeordnet. In Figur 2 ist ebenso das Zusammenspiel der Schweißflächen 4 und der Schweißflächen 4" erkennbar, die Wiederholungsrate der Schweißflächen 4" in x-Richtung ist dabei lediglich halb so hoch wie die Wiederholungsrate der Schweißflächen 4 beispielsweise der ersten Leiste 2, so dass lediglich auf Höhe jeder zweiten Schweißfläche 4 der Leiste 2 Schweißflächen 4" der Leiste 2" vorhanden sind.

Figur 3 zeigt eine Aufsicht auf das erfindungsgemäße Werkzeug in x-Richtung, d.h. auf die yz-Ebene. Die Figur 3 entspricht einem Schnitt in der yz-Ebene durch Figur 1 an einer Stelle, an der sowohl Schweißflächen 4, 4' als auch 4" ausgebildet sind. In Figur 3 sind die jeweiligen Schweißflächen 4, 4' und 4" als in z-Richtung erhaben erkennbar dargestellt, diese Schweißflächen sind dabei durch Einkerbungen 5 bzw. 5' voneinander getrennt, die im Falle der Ausführungsform der Figur 3 halbkreisförmige Einkerbungen darstellen.

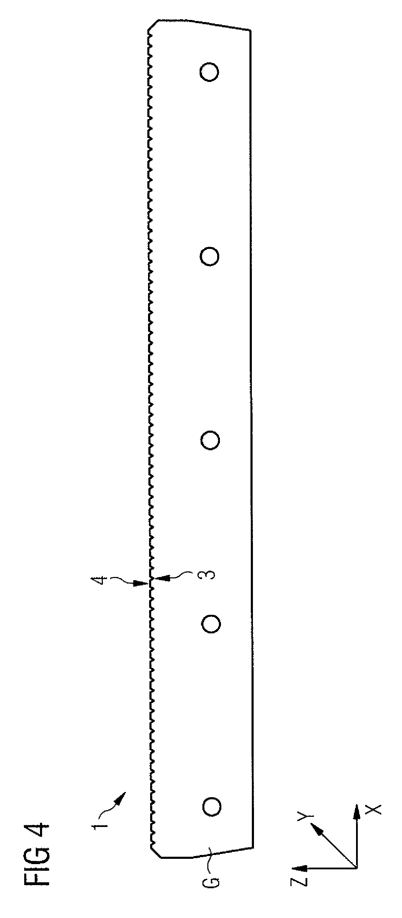

Figur 4 stellt schließlich die gesamtperspektivische Ansicht eines erfindungsgemäßen Schweißwerkzeugs 1 dar, hierbei ist insbesondere die vergrößerte Dimensionierung des Grundkörpers G dargestellt. Das erfindungsgemäße Schweißwerkzeug weist für den beispielhaften Fall der in Figur 4 dargestellten Ausführungsform 80 Einkerbungen 3 bzw. eine entsprechende Anzahl an Schweißflächen 4 auf.

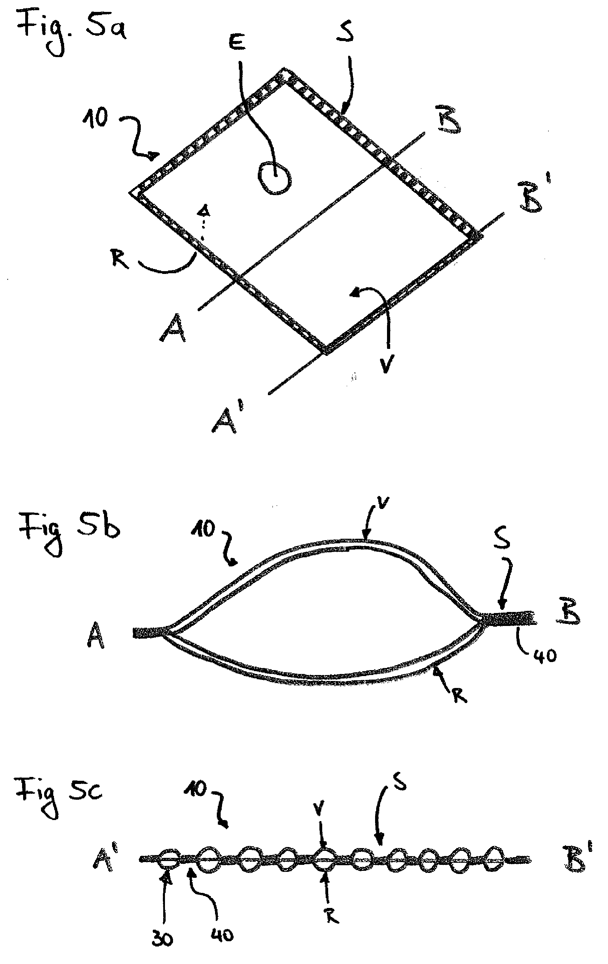

Die Figuren 5a bis 5c zeigen einen erfindungsgemäßen Staubsaugerfilterbeutel 10, der als Flachbeutel ausgeschaltet ist. Figur 5a zeigt dabei eine perspektivische Aufsicht auf die Vorderseite V des erfindungsgemäßen Staubsaugerfilterbeutels 10 in Form eines Flachbeutels, während Figur 5b den Schnitt durch den Staubsaugerfilterbeutel an der in Figur 5a dargestellten Schnittlinie A-B zeigt. Figur 5c zeigt einen Schnitt durch die in Figur 5a dargestellte Linie A'-B', d. h. durch die umlaufende Schweißnaht S.

Der Staubsaugerfilterbeutel 10 in Form eines Flachbeutels gemäß Figur 5a weist dabei eine Vorderseite V sowie eine Rückseite R auf. Vorder- wie Rückseite V bzw. R sind dabei jeweils aus einem thermisch verschweißbaren Filtermaterial gebildet, beispielsweise einem ein- oder mehrschichtigem Vliesstoffmaterial. Die Vorderseite V weist dabei eine Einströmöffnung E auf, durch die der Ausblasstutzen eines nicht dargestellten Staubsaugers mit dem Staubsaugerfilterbeutel 10 verbunden werden kann. Die Vorderseite V und die Rückseite R sind umlaufend mit einer Schweißnaht S miteinander verbunden.

Der Schnitt durch den Staubsaugerfilterbeutel, wie in Figur 5b dargestellt, zeigt die Verbindung der Vorderseite V und der Rückseite R des Staubsaugerfilterbeutels über die Schweißnaht S. Vorder- und Rückseite werden durch verschweißte Bereiche 40 der Schweißnaht S zusammengehalten.

In Figur 5c ist die erfindungsgemäße Ausgestaltung der Schweißnaht an Stelle des Schnittes A'-B', wie in Figur 5a gezeigt, dargestellt. Die Schweißnaht S weist dabei alternierend und äquidistant unverschweißte Bereiche 30 sowie verschweißte Bereiche 40 auf. Im Bereich der verschweißten Bereiche 40 ist das Filtermaterial der Vorderseite V und der Rückseite R miteinander verbunden. Beim Schweißvorgang kommt es hierbei zum Aufschmelzen und Verkleben des thermisch verschweißbaren Filtermaterials sowohl der Vorderseite V als auch der Rückseite R. Im Bereich der unverschweißten Bereiche 30 findet hierbei kein Verschmelzen der Lagen des Filtermaterials statt. Hier bleibt das Filtermaterial sowohl der Vorderseite V als auch der Rückseite R erhalten. Die Lagen des Filtermaterials V und R liegen hierbei allerdings formschlüssig übereinander und sind zu Wülsten verformt. Die erfindungsgemäße Ausgestaltung der Schweißnaht sieht dabei vor, dass die unverschweißten Bereiche 30 entlang der Schweißnaht, d. h. für den beispielhaften Fall der Darstellung in Figur 5c entlang der Schnittlinie A'-B', eine Dimensionierung von >1,0 mm bis 5,0 mm aufweisen. Die verschweißten Bereiche 40 weisen dabei eine Längsdimensionierung entlang der Schnittlinie A'-B' von 1,0 mm bis 10,0 mm auf. Bevorzugt sind die unverschweißten Bereiche 30 und die verschweißten Bereiche 40 alternierend und äquidistant angeordnet, d. h. unverschweißte Bereiche 40 und verschweißte Bereiche 30 wechseln sich mit der gleichen Wiederholungsrate ab.

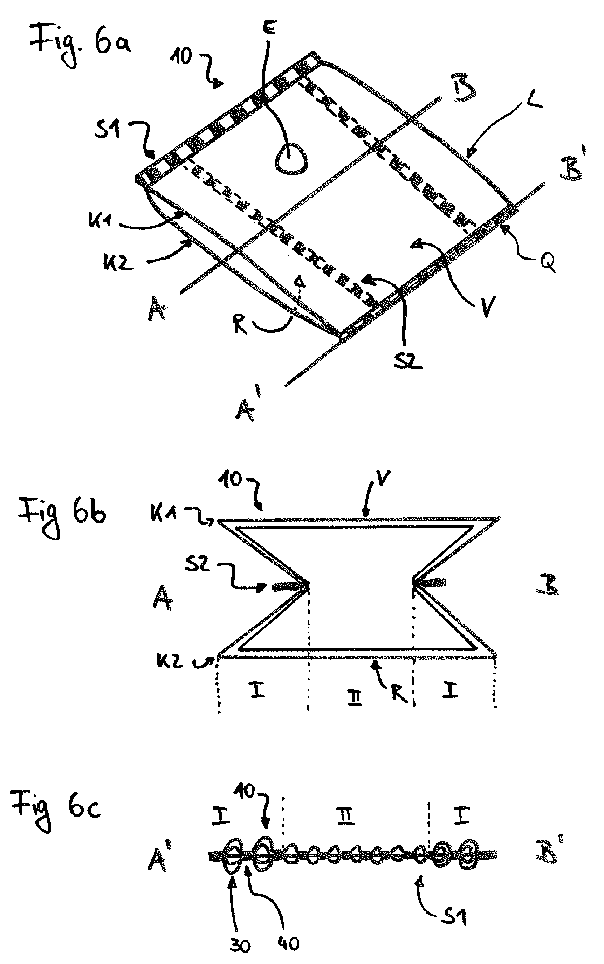

Figur 6a stellt einen erfindungsgemäßen Staubsaugerfilterbeutel 10 in Form eines Seitenfaltenbeutels dar. Dieser Staubsaugerfilterbeutel 10 weist zwei Längsseiten L sowie zwei Querseiten Q sowie ebenso eine Vorderseite V wie eine Rückseite R auf. Vorderseite V und Rückseite R sind ebenso aus einem thermisch verschweißten Filtermaterial, beispielsweise einem ein- oder mehrschichtigem Vliesstoffmaterial gebildet. Auf der Vorderseite V ist eine Einströmöffnung E vorhanden. Im Bereich der Längsseiten L ist das Filtermaterial sowohl der Vorderseite V und der Rückseite R eingeschlagen, sodass an der Längsseite zwei Seitenkanten K1 und K2 vorhanden sind. Die Seitenkante K1 ist dabei im Filtermaterial der Vorderseite V vorhanden, während die Seitenkante K2 der Filtermaterialbahn der Rückseite R zugeordnet ist. Vorderseite V und Rückseite R sind dabei stirnseitig, d. h. im Bereich der Querseite Q mittels einer Schweißnaht S1 verbunden, im Bereich des Einschlags sind Vorderseite V und Rückseite R mittels einer Schweißnaht S2 verbunden.

Figur 6b stellt einen Schnitt durch den erfindungsgemäßen Staubsaugerfilterbeutel 10 in Form eines Flachbeutels entlang der Schnittlinie A-B, wie in Figur 6a dargestellt, dar. Erkennbar ist, wie das Filtermaterial der Vorderseite V wie auch der Rückseite R eingeschlagen vorliegt und dort mittels einer Schweißnaht S2 verbunden ist. Durch das Einschlagen entstehen dabei die Seitenkanten K1 in der Vorderseite V bzw. K2 in der Rückseite R. Durch die Einfaltung der Vorderseite V und der Rückseite R entstehen im Staubsaugerfilterbeutel 10 als Flachbeutel dabei zwei Bereiche I und II, wobei denen - in Projektionsrichtung von Vorderseite V auf Rückseite R - beispielsweise vier Lagen des Filtermaterials übereinander angeordnet sind (Bereich I) bzw. zwei Lagen des Filtermaterials übereinander angeordnet sind (Bereich II).

Figur 6c zeigt einen Schnitt entlang der Schnittlinie A'-B' gemäß Figur 6a, d. h. durch eine stirnseitig angeordnete Schweißnaht S1 des erfindungsgemäßen Staubsaugerfilterbeutels 10 in Form eines Seitenfaltenbeutels. Diese Schweißnaht S1 weist dabei unverschweißte Bereiche 30 bzw. verschweißte Bereiche 40 auf, an denen die jeweils übereinander zum liegenden kommenden Lagen des Filtermaterials der Vorderseite und der Rückseite R miteinander verbunden sind. Sämtliche Lagen des Filtermaterials sind innerhalb der verschweißbaren Bereiche 40 miteinander verschmolzen. Im Bereich I, in dem, wie in Figur 6b dargestellt, vier Lagen des Filtermaterials übereinander zum liegen kommen, sind im Bereich der verschweißten Bereiche 40 sämtliche der vier Lagen miteinander verschmolzen. Im Bereich II sind bei innerhalb der verschweißten Bereiche 40 lediglich zwei Lagen des Filtermaterials miteinander verbunden, d. h. liegen miteinander verschmolzen vor. Die unverschweißten Bereiche 30 sind dabei innerhalb der Bereiche I derart ausgeschaltet, das die dort vorhandenen vier Lagen des Filtermaterials unverbunden miteinander vorliegen, jedoch formschlüssig aneinander angepresst vorliegen. Hierbei entstehen die in Figur 6c dargestellten Wülste. Innerhalb des Bereichs II sind lediglich zwei Lagen des Filtermaterials vorhanden, sodass hier eine identische Ausgestaltung der Schweißnaht wie in Figur 5c dargestellt ist. Die Schweißnaht S2, d. h. die innerhalb des Staubsaugerfilterbeutels liegende Schweißnaht an der Verbindungsstelle der Vorderseite V und der Rückseite R kann dabei auf identische Art und Weise wie in Figur 5c ausgestaltet sein.

Tabelle 1 zeigt Versuchsergebnisse, die bei Staubsaugerfilterbeuteln mit erfindungsgemäß ausgestalteten Schweißnähten erzielt werden können.

**Tabelle 1**

| **Beispiele** | **Flächenbezogene Masse Vliesstoff (g/m²)** | **Anzahl verschweißte Lagen (n)** | **Gesamtflächengewicht (g/m²)** | **Breite der Schweißfläche (mm)** | **Länge der Schweißfläche (mm)** | **Abstand zwischen den Schweißflächen (mm)** | **Winkel (°)** | **Zerreißkraft (N)** |
|---|---|---|---|---|---|---|---|---|
| 1* | 175 | 4 | 700 | 1,0 | 2,0 | 0,8 | 45 | 29 |
| 2 | 175 | 4 | 700 | 1,5 | 2,5 | 1,5 | 45 | 102 |
| 3 | 175 | 4 | 700 | 1,5 | 3,0 | 2,0 | 60 | 103 |
| 4 | 175 | 4 | 700 | 1,5 | 2,5 | 2,5 | 90 | 95 |

Tabelle 1 zeigt die Resultate der Zerreißkraftmessungen anhand verschweißter Filtermaterialien gemäß DIN EN29073-3. Die zu untersuchenden verschweißten Filtermaterialien werden dabei derart zwischen die Backen der Zugprüfmaschine eingespannt, das die zu prüfende Schweißnaht mittig zwischen den Backen angeordnet ist. Die Prüflinge weisen dabei 4 verschweißte Materiallagen auf, hierbei werden jeweils zwei Lagen des Materials in je eine Backe der Zugprüfmaschine eingespannt. Die Schweißnähte der untersuchten Prüflinge weisen dabei alternierend angeordnete verschweißte und unverschweißte Bereiche auf. Beim Vergleichsbeispiel 1* beträgt der Abstand zwischen den Schweißflächen jeweils lediglich 0,8 mm, während bei den erfindungsgemäßen Beispielen 2-4 der Abstand zwischen den Schweißflächen größer gewählt ist.

Vergleichsbeispiel 1* zeigt deutlich, dass ein kleiner Abstand zwischen den Schweißflächen schlechte Ergebnisse, insbesondere bei hohem Gesamtflächengewicht der verschweißten Materiallagen liefert. Die hierzu vergleichbaren erfindungsgemäßen Beispiele 2, 3 sowie 4 zeigen überraschenderweise allesamt deutlich höhere Zerreißkräfte der resultierenden Schweißnaht, obwohl die Dichte der Schweißpunkte aufgrund des größeren Abstandes der verschweißten Bereiche zueinander geringer ausfällt, als beim Vergleichsbeispiel 1*.

Beispiel 2 zeigt, dass die Erhöhung des Abstandes zwischen den Schweißflächen auf beispielsweise 1,5 mm hervorragende Auswirkungen auf die maximale Zerreißkraft der Probe innehat. Insbesondere bei vier verschweißten Materiallagen ist eine Steigerung der Zerreißkraft um ca. 300 % zu erkennen. Die Erhöhung des Abstandes zwischen en Schweißflächen beeinflusst das Ergebnis somit überraschenderweise deutlich positiv. Auch eine weitere Erhöhung des Abstandes zwischen den Schweißflächen (siehe beispielsweise Beispiele 3 und 4) zeigt deutlich, dass überraschenderweise insbesondere bei hohen Gesamtflächen gewichten, d. h. beispielsweise vier verschweißten Lagen eine deutliche Steigerung der Zerreißkraft zu beobachten ist.

## Patentansprüche

1. Staubsaugerfilterbeutel (10) aus einem thermisch verschweißbaren Filtermaterial, wobei durch das Filtermaterial ein abgeschlossener Innenraum des Staubsaugerfilterbeutels (10) definiert wird, wobei der Innenraum zumindest an einer Seite des Staubsaugerfilterbeutels (10) mittels einer linienförmig verlaufenden Schweißnaht (S) verschlossen ist, bei der zumindest zwei Lagen des Filtermaterials miteinander verschweißt sind,
wobei die Schweißnaht (S) in Richtung des linienförmigen Verlaufs alternierend verschweißte (40) und unverschweißte (30) Bereiche der zumindest zwei Lagen aufweist, **dadurch gekennzeichnet, dass** die verschweißten Bereiche (40) eine in Richtung des linienförmigen Verlaufs gemessene Dimensionierung von 1,0 mm bis 10,0 mm, eine lotrecht zum linienförmigen Verlauf gemessene Dimensionierung von 1,3 mm bis 10,0 mm und die unverschweißten Bereiche (30) eine in Richtung des linienförmigen Verlaufs gemessene Dimensionierung von > 1,0 mm bis 5,0 mm aufweisen.

2. Staubsaugerfilterbeutel (10) nach Anspruch 1, **dadurch gekennzeichnet, dass** die unverschweißten Bereiche (30) eine in Richtung des linienförmigen Verlaufs gemessene Dimensionierung von 1,2 mm bis 5,0 mm, bevorzugt von 1,2 mm bis 3,0 mm, besonders bevorzugt von 1,4 mm bis 2,5 mm aufweisen.

3. Staubsaugerfilterbeutel (10) nach einem der vorhergehenden Ansprüche, **dadurch gekennzeichnet, dass** die verschweißten Bereiche (40) eine in Richtung des linienförmigen Verlaufs gemessene Dimensionierung von 1,5 mm bis 7,5 mm, bevorzugt von 1,75 mm bis 5,0 mm, besonders bevorzugt von 2,0 mm bis 3,5 mm aufweisen.

4. Staubsaugerfilterbeutel (10) nach einem der vorhergehenden Ansprüche, **dadurch gekennzeichnet, dass** in Richtung des linienförmigen Verlaufs der Schweißnaht (S) die Dimensionierung der verschweißten Bereiche (40) größer ist als die Dimensionierung der unverschweißten Bereiche (30).

5. Staubsaugerfilterbeutel (10) nach einem der vorhergehenden Ansprüche, **dadurch gekennzeichnet, dass** die alternierende Anordnung der verschweißten (40) und unverschweißten Bereiche (30) äquidistant ist.

6. Staubsaugerfilterbeutel (10) nach einem der vorhergehenden Ansprüche, **dadurch gekennzeichnet, dass** die Schweißnaht (S) eine lotrecht zum linienförmigen Verlauf gemessene Dimensionierung von 1,3 mm bis 5,0 mm, bevorzugt von 1,4 mm bis 3,0 mm aufweist.

7. Staubsaugerfilterbeutel (10) nach einem der vorhergehenden Ansprüche, **dadurch gekennzeichnet, dass** die verschweißten Bereiche (40) im wesentlichen rechteckig oder rechteckig ausgebildet sind.

8. Staubsaugerfilterbeutel (10) nach einem der vorhergehenden Ansprüche, **dadurch gekennzeichnet, dass** das jede Lage des Filtermaterials ein ein- oder mehrlagiges Vliesstoffmaterial ist, bevorzugt mit einem Gesamtflächengewicht von mindestens 400 g/m², bevorzugt mindestens 500 g/m², weiter bevorzugt mindestens 600 g/m², insbesondere mindestens 700 g/m².

9. Staubsaugerfilterbeutel (10) nach vorhergehendem Anspruch, **dadurch gekennzeichnet, dass** das Vliesstoffmaterial mindestens 3 Lagen, bevorzugt mindestens 4 bis 8 Lagen, insbesondere 4 Lagen aufweist.

10. Staubsaugerfilterbeutel (10) nach einem der vorhergehenden Ansprüche, **dadurch gekennzeichnet, dass** die Schweißnaht (S) einer Zerreißkraft, gemessen nach DIN EN 29073-3 von mindestens 30 N, bevorzugt mindestens 50 N, besonders bevorzugt mindestens 70 N aufweist.

11. Staubsaugerfilterbeutel (10) nach einem der vorhergehenden Ansprüche,
a) in Form eines Flachbeutels, bei dem mindestens zwei Lagen des Filtermaterials randseitig umlaufend miteinander verschweißt sind wobei die Verschweißung zumindest bereichsweise, bevorzugt komplett als Schweißnaht (S) wie in einem der vorhergehenden Ansprüche definiert ausgebildet ist, oder
b) in Form eines Seitenfaltenbeutels, bei dem der Staubsaugerfilterbeutel (10) zwei Längs- (L) und zwei Querseiten (Q) aufweist, wobei mindestens zwei Lagen des Filtermaterials längsseitig miteinander verschweißt und in den Staubsaugerfilterbeutel (10) eingeschlagen und querseitig miteinander verschweißt sind, wobei zumindest die querseiteigen Schweißnähte (S) wie in einem der vorhergehenden Ansprüche definiert ausgebildet sind, oder
c) in Form eines 3D-Beutels oder Block- oder Klotzbodenbeutels, bei dem mindestens zwei Lagen des Filtermaterials mit einer in einem der vorhergehenden Ansprüche definierten Schweißnaht (S) verschweißt sind.

12. Verfahren zur Herstellung eines Staubsaugerfilterbeutels (10) nach einem der vorhergehenden Ansprüche, bei dem mindestens eine linienförmig verlaufende Schweißnaht (S) durch thermisches Verschweißen, insbesondere durch Ultraschallverschweißen zumindest zweier Lagen des Filtermaterials erzeugt wird, wobei die Schweißnaht (S) in Richtung des linienförmigen Verlaufs alternierend verschweißte (40) und unverschweißte (30) Bereiche der zumindest zwei Lagen aufweist, wobei die verschweißten Bereiche (40) eine in Richtung des linienförmigen Verlaufs gemessene Dimensionierung von 1,0 mm bis 10,0 mm, eine lotrecht zum linienförmigen Verlauf gemessene Dimensionierung von 1,3 mm bis 10,0 mm und die unverschweißten Bereiche (30) eine in Richtung des linienförmigen Verlaufs gemessene Dimensionierung von > 1,0 mm bis 10,0 mm aufweisen.

13. Verfahren nach vorhergehendem Anspruch, **dadurch gekennzeichnet, dass** die linienförmige Schweißnaht (S) durch Ultraschallverschweißen erzeugt wird, wobei ein Werkzeug (1), umfassend einen Grundkörper (G) sowie mindestens eine erste sich in eine x-Richtung längs erstreckende, in eine y-Richtung eine Breite (B) aufweisende und in eine z-Richtung erhabene Leiste (2) mit in z-Richtung abschließender planer Arbeitsfläche, die eine Mehrzahl von in y-Richtung parallel verlaufenden und ausgehend von der Arbeitsfläche in z-Richtung vertieften Einkerbungen (3), die eine Mehrzahl von Schweißflächen (4) definiert, wobei die Längsdimensionierung der Einkerbungen (3) in x-Richtung von > 1,0 mm bis 10,0 mm und die Längsdimensionierung der Schweißflächen (4) in x-Richtung 1,0 mm bis 10,0 mm beträgt, sowie eine Gegenstück zum Werkzeug (1), das beim Schweißvorgang über der Leiste (2) angeordnet ist, eingesetzt wird, wobei die mindestens zwei Lagen des Filtermaterials zur Erzeugung der Schweißnaht (S) zwischen Werkzeug (1) und Gegenstück angeordnet werden, Werkzeug (1) und Gegenstück aufeinander zubewegt werden, so dass die mindestens zwei Lagen des Filtermaterials angepasst werden und zum Verschweißen Ultraschall in das Gegenstück und/oder in das Werkzeug (1) eingekoppelt wird.

14. Werkzeug (1) für eine Ultraschallschweißanlage, umfassend einen Grundkörper (G) sowie mindestens eine erste sich in eine x-Richtung längs erstreckende, in eine y-Richtung eine Breite (B) aufweisende und in eine z-Richtung erhabene Leiste (2) mit in z-Richtung abschließender planer Arbeitsfläche, die eine Mehrzahl von in y-Richtung parallel verlaufenden und ausgehend von der Arbeitsfläche in z-Richtung vertieften Einkerbungen (3), die eine Mehrzahl von Schweißflächen (4) definiert, aufweist, wobei
die Längsdimensionierung der Einkerbungen (3) in x-Richtung von > 1,0 mm bis 10,0 mm, die Längsdimensionierung der Schweißflächen (4) in x-Richtung 1,0 mm bis 10,0 mm beträgt, und **dadurch gekennzeichnet, dass** die Breite (B) der Schweißflächen (4) in y-Richtung von 1,3 mm bis 10,0 mm beträgt.

15. Werkzeug (1) nach vorhergehendem Anspruch, **dadurch gekennzeichnet, dass** die Längsdimensionierung der Einkerbungen (3) in x-Richtung von 1,2 mm bis 8,0 mm, bevorzugt von 1,3 mm bis 5,0 mm, besonders bevorzugt von 1,4 mm bis 3,0 mm beträgt.

16. Werkzeug (1) nach einem der beiden vorhergehenden Ansprüche, **dadurch gekennzeichnet, dass** die Längsdimensionierung der Schweißflächen (4) in x-Richtung von 1,5 mm bis 7,5 mm, bevorzugt von 1,75 mm bis 5,0 mm, besonders bevorzugt von 2,0 mm bis 3,5 mm beträgt.

17. Werkzeug (1) nach einem der Ansprüche 14 bis 16, **dadurch gekennzeichnet, dass** in x-Richtung die Längsdimensionierung der Schweißflächen (4) größer ist als die Längsdimensionierung der Einkerbungen (3).

18. Werkzeug (1) nach einem der Ansprüche 14 bis 17, **dadurch gekennzeichnet, dass** die Einkerbungen (3) in x-Richtung äquidistant angeordnet sind.

19. Werkzeug (1) nach einem der Ansprüche 14 bis 18, **dadurch gekennzeichnet, dass** die Breite (B) der Schweißflächen (4) in y-Richtung von 1,3 mm bis 5,0 mm, besonders bevorzugt von 1,4 mm bis 3,0 mm beträgt.

20. Werkzeug (1) nach einem der Ansprüche 14 bis 18, **dadurch gekennzeichnet, dass** die Schweißflächen (4) einen im Wesentlichen rechteckigen oder rechteckigen Umriss aufweisen.

21. Werkzeug (1) nach einem der Ansprüche 14 bis 20, **dadurch gekennzeichnet, dass** die Einkerbungen (3) in Projektion auf eine xz-Ebene ein dreieckiges oder trapezoidales Profil aufweisen, wobei bevorzugt die das Dreiecksprofil oder das trapezoidale Profil bildenden Flanken der Einkerbungen (3) einen Winkel (α) von 30 ° bis 120 °, bevorzugt 40 ° bis 100 ° zueinander aufweisen.

22. Werkzeug (1) nach einem der Ansprüche 14 bis 21, **dadurch gekennzeichnet, dass** der Grundkörper (G) mindestens eine zweite sich in eine x-Richtung längs erstreckende, in eine y-Richtung eine Breite (B') aufweisende und in eine z-Richtung erhabene Leiste (2') mit in z-Richtung abschließender planer Arbeitsfläche, die eine Mehrzahl von in y-Richtung parallel verlaufenden und ausgehend von der Arbeitsfläche in z-Richtung vertieften Einkerbungen (3'), die eine Mehrzahl von Schweißflächen (4') definiert, aufweist, wobei die Längsdimensionierung der Einkerbungen (3') in x-Richtung von > 1,0 mm bis 10,0 mm und die Längsdimensionierung der Schweißflächen (4') in x-Richtung 1,0 mm bis 10,0 mm beträgt, die mindestens eine zweite Leiste (2') in x-Richtung parallel und in einem Abstand (d) zur mindestens einen ersten Leiste (2) angeordnet ist, und die Arbeitsfläche der mindestens einen zweiten Leiste (2') die gleiche Dimensionierung in z-Richtung aufweist wie die der mindestens eine erste Leiste (2).

23. Werkzeug (1) nach vorhergehendem Anspruch, **dadurch gekennzeichnet, dass** zwischen der ersten Leiste (2) und der zweiten Leiste (2') mindestens eine dritte in eine z-Richtung erhabene Leiste (2") mit in z-Richtung abschließender planer Arbeitsfläche mit in z-Richtung verlaufenden Aussparungen (3"), die eine Mehrzahl von Schweißflächen (4") definiert, angeordnet ist, wobei die Arbeitsfläche der mindestens einen dritten Leiste (2") die gleiche Dimensionierung in z-Richtung aufweist wie die der mindestens eine erste Leiste (2).

24. Ultraschallschweißanlage, umfassend
ein Werkzeug (1) nach einem der Ansprüche 14 bis 23 sowie mindestens eine Sonotrode mit durchgängig ausgebildeter Arbeitsoberfläche, wobei Sonotrode und Werkzeug (1) beweglich so zueinander angeordnet sind, dass beim Schweißvorgang die Sonotrode und die mindestens eine erste Leiste (2), ggf. die mindestens eine zweite Leiste (2') und ggf. die mindestens eine dritte Leiste (2") übereinander angeordnet sind, oder
einen Amboss mit durchgängig ausgebildeter Arbeitsoberfläche und ein Werkzeug (1) nach einem der Ansprüche 12 bis 23, das als Sonotrode betrieben wird, wobei Amboss und Werkzeug (1) beweglich so zueinander angeordnet sind, dass beim Schweißvorgang der Amboss und die mindestens eine erste Leiste (2), ggf. die mindestens eine zweite Leiste (2') und ggf. die mindestens eine dritte Leiste (2") übereinander angeordnet sind.

## Claims

1. A vacuum cleaner filter bag (10) of a thermally weldable filter material , wherein a closed off interior of the vacuum cleaner filter bag (10) is defined by the filter material, wherein the interior is closed at at least one side of the vacuum cleaner filter bag (10) by means of a linearly running weld seam (S) at which at least two layers of the filter material are welded to one another, wherein in the direction of the linear course, the weld seam (S) alternately has welded (40) and unwelded (30) regions of the at least two layers, **characterised in that** the welded regions (40) are dimensioned from 1.0 mm to 10.0 mm measured in the direction of the linear course, are dimensioned from 1.3 mm to 10.0 mm measured perpendicularly to the linear course and the unwelded regions (30) are dimensioned from > 1.0 mm to 5.0 mm measured in the direction of the linear course.

2. A vacuum cleaner filter bag (10) according to claim 1, **characterised in that** the unwelded regions (30) are dimensioned from 1.2 mm to 5.0 mm measured in the direction of the linear course, preferably from 1.2 mm to 3.0 mm, particularly preferably from 1.4 mm to 2.5 mm.

3. A vacuum cleaner filter bag (10) according to any one of the preceding claims, **characterised in that** the welded regions (40) are dimensioned from 1.5 mm to 7.5 mm measured in the direction of the linear course, preferably from 1.75 mm to 5.0 mm, particularly preferably from 2.0 mm to 3.5 mm.

4. A vacuum cleaner filter bag (10) according to any one of the preceding claims, **characterised in that** in the direction of the linear course of the weld seam (S), the dimension of the welded regions (40) is greater than the dimension of the unwelded regions (30).

5. A vacuum cleaner filter bag (10) according to any one of the preceding claims, **characterised in that** the alternating arrangement of the welded (40) and unwelded regions (30) is equidistantly.

6. A vacuum cleaner filter bag (10) according to any one of the preceding claims, **characterised in that** the weld seam (S) is dimensioned from 1.3 mm to 5.0 mm, preferably from 1.4 mm to 3.0 mm, measured perpendicularly to the linear course.

7. A vacuum cleaner filter bag (10) according to any one of the preceding claims, **characterised in that** the welded regions (40) are substantially rectangular or rectangular.

8. A vacuum cleaner filter bag (10) according to any one of the preceding claims, **characterised in that** each layer of the filter material is a single-layer or multi-layer nonwoven material, preferably with a total area weight of at least 400 g/m², preferably at least 500 g/m², more preferably at least 600 g/m², in particular at least 700 g/m².

9. A vacuum cleaner filter bag (10) according to the preceding claim, **characterised in that** the nonwoven material has at least 3 layers, preferably at least 4 to 8 layers, in particular 4 layers.

10. A vacuum cleaner filter bag (10) according to any one of the preceding claims, **characterised in that** the weld seam (S) has a tearing force, measured according to DIN EN 29073-3, of at least 30 N, preferably at least 50 N, particularly preferably at least 70 N.

11. A vacuum cleaner filter bag (10) according to any one of the preceding claims,
a) in the form of a flat bag with which at least two layers of the filter material are at the edge welded to one another in a circumferential manner, wherein the welding is at least in regions, preferably completely, in the form of a weld seam (S) as defined in one of the preceding claims, or
b) in the form of a side-gusseted bag with which the vacuum cleaner filter bag (10) has two longitudinal sides (L) and two transverse sides (Q), wherein at least two layers of the filter material are welded to one another at the long sides and folded into the vacuum cleaner filter bag (10) and are welded to one another at the transverse sides, wherein at least the transverse weld seams (S) are formed as defined in one of the preceding claims, or
c) in the form of a 3D bag or square bottom bag, with which at least two layers of the filter material are welded with a weld seam (S) defined in one of the preceding claims.

12. A method of manufacturing a vacuum cleaner filter bag (10) according to any one of the preceding claims, in which at least one linearly running weld seam (S) is produced by thermal welding, in particular by ultrasonic welding of at least two layers of the filter material, wherein in the direction of the linear course, the weld seam (S) alternately has welded (40) and unwelded (30) regions of the at least two layers, wherein the welded regions (40) are dimensioned from 1.0 mm to 10.0 mm measured in the direction of the linear course, are dimensioned from 1.3 mm to 10.0 mm measured perpendicularly to the linear course and the unwelded regions (30) are dimensioned from > 1.0 mm to 5.0 mm measured in the direction of the linear course.

13. A method according to the preceding claim, **characterised in that** the linear weld seam (S) is produced by ultrasonic welding, wherein use is made of a tool (1), comprising a base body (G) as well as at least one first strip (2) which extends longitudinally in an x-direction, has a width (B) in a y-direction, is raised in a z-direction and has a plane working surface terminating in the z-direction, which working surface [has] a plurality of notches (3) running parallel in the y-direction and recessed from the working surface in the z-direction, which plurality of notches defines a plurality of welding surfaces (4), wherein the longitudinal dimension of the notches (3) in the x-direction is from > 1.0 mm to 10.0 mm and the longitudinal dimension of the welding surfaces (4) in the x direction is 1.0 mm to 10.0 mm, as well as of a companion part to the tool (1), which companion part is arranged above the strip (2) during the welding process, wherein the at least two layers of the filter material are arranged between the tool (1) and the companion part in order to produce the weld seam (S), the tool (1) and the companion part are moved towards one another, so that the at least two layers of the filter material are matched and ultrasound is coupled into the companion part and/or into the tool (1) for the purpose of welding.

14. A tool (1) for an ultrasonic welding installation, comprising a base body (G) as well as at least one first strip (2) which extends longitudinally in an x-direction, has a width (B) in a y-direction, is raised in a z-direction and has a plane working surface terminating in the z-direction, which working surface has a plurality of notches (3) running parallel in the y-direction and recessed from the working surface, which plurality of notches defines a plurality of welding surfaces (4), wherein the longitudinal dimension of the notches (3) in the x-direction is from > 1.0 mm to 10.0 mm, the longitudinal dimension of the welding surfaces (4) in the x direction is 1.0 mm to 10.0 mm, and **characterised in that** the width (B) of the welding surfaces (4) in the y-direction is from 1.3 mm to 10.0 mm.

15. A tool (1) according to the preceding claim, **characterised in that** the longitudinal dimension of the notches (3) in the x-direction is from 1.2 mm to 8.0 mm, preferably from 1.3 mm to 5.0 mm, particular preferably from 1.4 mm to 3.0 mm.

16. A tool (1) according to either one of the two preceding claims, **characterised in that** the longitudinal dimension of the welding surfaces (4) in the x-direction is from 1.5 mm to 7.5 mm, preferably from 1.75 mm to 5.0 mm, particularly preferably from 2.0 mm to 3.5 mm.

17. A tool (1) according to any one of claims 14 to 16, **characterised in that** in the x-direction the longitudinal dimension of the welding surfaces (4) is greater than the longitudinal dimension of the notches (3).

18. A tool (1) according to any one of claims 14 to 17, **characterised in that** the notches (3) are arranged equidistantly in the x-direction.

19. A tool (1) according to any one of claims 14 to 18, **characterised in that** the width (B) of the welding surfaces (4) in the y-direction is from 1.3 mm to 5.0 mm, particularly preferably from 1.4 mm to 3.0 mm.

20. A tool (1) according to any one of claims 14 to 18, **characterised in that** the welding surfaces (4) have a substantially rectangular or rectangular contour.

21. A tool (1) according to any one of claims 14 to 20, **characterised in that** the notches (3) have a triangular or trapezoidal profile projected on the xz-plane, wherein the flanks of the notches (3) forming the triangular profile or the trapezoidal profile preferably are at an angle (α) from 30° to 120°, preferably 40° to 100°, to one another.

22. A tool (1) according to any one of claims 14 to 21, **characterised in that** the base body (G) has at least one second strip (2') which extends longitudinally in an x-direction, has a width (B') in a y-direction, is raised in a z-direction and has a plane working surface terminating in the z-direction, which working surface [has] a plurality of notches (3') running parallel in the y-direction and recessed from the working surface, which plurality of notches defines a plurality of welding surfaces (4'), wherein the longitudinal dimension of the notches (3') in the x-direction is from > 1.0 mm to 10.0 mm and the longitudinal dimension of the welding surfaces (4') in the x direction is 1.0 mm to 10.0 mm, the at least one second strip (2') is arranged parallel in the x-direction and at a distance (d) from the at least one first strip (2), and the working surface of the at least one second strip (2') has the same dimension in the z-direction as that of the at least one first strip (2).

23. A tool (1) according to the preceding claim, **characterised in that** between the first strip (2) and the second strip (2') there is arranged at least one third strip (2") which is raised in a z-direction and has a plane working surface, terminating in the z-direction, with cut-outs (3") running in the z-direction, which cut-out defines a plurality of welding surfaces (4"), wherein the working surface of the at least one third strip (2") has the same dimension in the z-direction as that of the at least one first strip (2).

24. An ultrasonic welding installation comprising a tool (1) according to any one of claims 14 to 23 as well as at least one sonotrode with a continuous working surface, wherein the sonotrode and the tool (1) are movably arranged in relation to one another in such a manner that during the welding process the sonotrode and the at least one first strip (2), optionally the at least one second strip (2') and optionally the at least one third strip (2"), are arranged one above the other, or comprising an anvil with a continuous working surface and a tool (1) according to any one of claims 12 to 23 operated as a sonotrode, wherein the anvil and the tool (1) are movably arranged in relation to one another in such a manner that during the welding process the anvil and the at least one first strip (2), optionally the at least one second strip (2') and optionally the at least one third strip (2"), are arranged one above the other.

## Revendications

1. Sac filtrant pour aspirateur (10) constitué d'un matériau filtrant pouvant être scellé thermiquement, le matériau filtrant permettant de définir un espace interne fermé du sac filtrant pour aspirateur (10), l'espace interne étant fermé au niveau d'un côté du sac filtrant pour aspirateur (10) au moyen d'un cordon de soudure (S) linéaire, dans lequel au moins deux couches de matériau filtrant sont soudées entre elles,
le cordon de soudure (S) comprenant, dans la direction de l'extension linéaire, des zones alternées scellées (40) et non scellés (30) des au moins deux couches, **caractérisé en ce que**
les zones soudées (40) présentent une dimension, mesurée dans la direction de l'extension linéaire, de 1,0 mm à 10,0 mm, une dimension, mesurée perpendiculairement à la direction de l'extension, de 1,3 mm à 10,0 mm et les zones non scellées (30) présentent une dimension, mesurée dans la direction de l'extension linéaire > 1,0 mm à 5,0 mm.

2. Sac filtrant pour aspirateur (10) selon la revendication 1, **caractérisé en ce que** les zones non scellées (30) présentent une dimension, mesurée dans la direction de l'extension linéaire, de 1,2 mm à 5,0 mm, de préférence de 1,2 mm à 3,0 mm, plus particulièrement de préférence de 1,4 à 2,5 mm.

3. Sac filtrant pour aspirateur (10) selon l'une des revendications précédentes, **caractérisé en ce que** les zones scellées (40) présentent une dimension, mesurée dans la direction de l'extension linéaire, de 1,5 m à 7,5 mm, de préférence de 1,75 mm à 5,0 mm, plus particulièrement de préférence de 2,0 mm à 3,5 mm.

4. Sac filtrant pour aspirateur (10) selon l'une des revendications précédentes, **caractérisé en ce que**, dans la direction de l'extension linéaire du cordon de soudure (S), la dimension des zones scellées (40) est supérieure à la dimension des zones non scellées (30).

5. Sac filtrant pour aspirateur (10) selon l'une des revendications précédentes, **caractérisé en ce que** la disposition alternée des zones scellées (40) et non scellées (30) est équidistante.

6. Sac filtrant pour aspirateur (10) selon l'une des revendications précédentes, **caractérisé en ce que** le cordon de soudure (S) présente une dimension, mesurée perpendiculairement à l'extension linéaire, de 1,3 mm à 5,0 mm, de préférence de 1,4 mm à 3,0 mm.

7. Sac filtrant pour aspirateur (10) selon l'une des revendications précédentes, **caractérisé en ce que** les zones scellées (40) sont conçues de manière globalement rectangulaire ou de manière parfaitement rectangulaire.

8. Sac filtrant pour aspirateur (10) selon l'une des revendications précédentes, **caractérisé en ce que** chaque couche du matériau filtrant est un matériau non tissé comportant une ou plusieurs couches, de préférence avec un poids surfacique total d'au moins 400 g/m², de préférence d'au moins 500 g/m², mieux d'au moins 600 g/m², et encore mieux d'au moins 700 g/m².

9. Sac filtrant pour aspirateur (10) selon la revendication précédente, **caractérisé en ce que** le matériau non tissé comprend au moins 3 couches, de préférence au moins 4 à 8 couches, plus particulièrement 4 couches.

10. Sac filtrant pour aspirateur (10) selon l'une des revendications précédentes, **caractérisé en ce que** le cordon de soudure (S) présente une résistance à la déchirure, mesurée selon DIN-EN 29073-3, d'au moins 30 N, de préférence d'au moins 50 N, plus particulièrement de préférence d'au moins 70 N.

11. Sac filtrant pour aspirateur (10) selon l'une des revendications précédentes,
a) sous la forme d'un sac plat, dans lequel au moins deux couches de matériau filtrant sont scellées entre elles de manière circulaire sur le bord, le scellement étant conçu au moins partiellement, de préférence entièrement comme un cordon de soudure (S), comme défini dans l'une des revendications précédentes, ou
b) sous la forme d'un sac à pli latéral, dans lequel le sac filtrant pour aspirateur (10) comprend deux côtés longitudinaux (L) et deux côtés transversaux (Q), au moins deux couches du matériau filtrant étant scellés entre eux sur un côté longitudinal et insérées dans le sac filtrant pour aspirateur (10) et scellées entre elles sur un côté transversal, au moins les cordons de soudure (S) côté transversal étant conçus comme défini dans l'une des revendications précédentes, ou
c) sous la forme d'un sac 3D ou d'un sac à fond plat, dans lequel au moins deux couches du matériau filtrant sont scellées avec un cordon de soudure (S) défini dans l'une des revendications précédentes.

12. Procédé de fabrication d'un sac filtrant pour aspirateur (10) selon l'une des revendications précédentes, dans lequel au moins un cordon de soudure (S) linéaire est réalisé, par scellement thermique, plus particulièrement par scellement aux ultrasons d'au moins deux couches du matériau filtrant, le cordon de soudure (S) comprenant, dans la direction de l'extension linéaire, des zones alternativement scellées (40) et non scellées (30) des au moins deux couches, les zones scellées (40) présentant une dimension, mesurée dans la direction de l'extension linéaire, de 1,0 mm à 10,0 mm, une dimension, mesurée perpendiculairement à la direction d'extension linéaire, de 1,3 mm à 10,0 mm, et les zones non scellées (30) présentant une dimension, mesurée dans la direction de l'extension linéaire, > 1,0 mm à 10,0 mm.

13. Procédé selon la revendication précédente, **caractérisé en ce que** le cordon de soudure linéaire (S) est réalisé par soudure aux ultrasons, un outil (1), comprenant un corps de base (G) et au moins une première baguette (2) s'étendant longitudinalement dans une direction x, présentant une largeur (B) et surélevée dans une direction z, avec une surface de travail finale plane dans la direction z, qui comprend une pluralité d'encoches (3) s'étendant parallèlement dans la direction y et approfondies à partir de la surface de travail dans la direction z, qui définit une pluralité de surfaces de soudure (4), la dimension longitudinale des encoches (3) étant, dans la direction x, > 1,0 mm à 10,0 mm et la dimension longitudinale des surfaces de soudure (4) dans la direction x étant de 1,0 mm à 10,0 mm, ainsi qu'une contre-pièce de l'outil (1), qui est disposée lors du processus de soudure au-dessus de la baguette (2), étant utilisé, les au moins deux couches de matériau filtrant étant disposées pour la réalisation du cordon de soudure (S) entre l'outil (1) et la contre-pièce, l'outil (1) et la contre-pièce étant déplacés l'un vers l'autre de façon à ce que les au moins deux couches de matériau filtrant soient ajustées et soient couplées pour la soudure par ultrasons dans la contre-pièce et/ou dans l'outil (1).

14. Outil (1) pour une installation de soudure par ultrasons, comprenant un corps de base (G) et au moins une première baguette (2) s'étendant longitudinalement dans une direction x, présentant une largeur (B) et surélevée dans une direction z, avec une surface de travail finale plane dans la direction z, qui comprend une pluralité d'encoches (3) s'étendant parallèlement dans la direction y et approfondies à partir de la surface de travail dans la direction z, qui définit une pluralité de surfaces de soudure (4), la dimension longitudinale des encoches (3) étant, dans la direction x, > 1,0 mm à 10,0 mm et la dimension longitudinale des surfaces de soudure (4) dans la direction x étant de 1,0 mm à 10,0 mm, et **caractérisé en ce que** la largeur (B) des surfaces de soudure (4) dans la direction y est de 1,3 mm à 10,0 mm.

15. Outil (1) selon la revendication précédente, **caractérisé en ce que** la dimension longitudinale des encoches (3) dans la direction x est de 1,2 à 8,0 mm, de préférence de 1,3 mm à 5,0 mm, plus particulièrement de préférence de 1,4 mm à 3,0 mm.

16. Outil (1) selon l'une des deux revendications précédentes, **caractérisé en ce que** la dimension longitudinale des surfaces de soudure (4) dans la direction x est de 1,5 mm à 7,5 mm, de préférence de 1,75 mm à 5,0 mm, plus particulièrement de préférence de 2,0 mm à 3,5 mm.

17. Outil (1) selon l'une des revendications 14 à 16, **caractérisé en ce que**, dans la direction x, la dimension longitudinale des surfaces de soudure (4) est supérieure à la dimension longitudinale des encoches (3).

18. Outil (1) selon l'une des revendications 14 à 17, **caractérisé en ce que** les encoches (3) sont disposées de manière équidistante dans la direction x.

19. Outil (1) selon l'une des revendications 14 à 18, **caractérisé en ce que** la largeur (B) des surfaces de soudure (4) dans la direction y est de 1,3 mm à 5,0 mm, plus particulièrement de préférence de 1,4 mm à 3,0 mm.

20. Outil (1) selon l'une des revendications 14 à 18, **caractérisé en ce que** les surfaces de soudure (4) présentent un contour globalement rectangulaire ou parfaitement rectangulaire.

21. Outil (1) selon l'une des revendications 14 à 20, **caractérisé en ce que** les encoches (3) présentent, en projection sur un plan xz, un profil triangulaire ou trapézoïdal, de préférence les flancs des encoches (3) formant le profil triangulaire ou le profil trapézoïdal définissant entre eux un angle (α) de 30° à 120°, de préférence de 40° à 100°.

22. Outil (1) selon l'une des revendications 14 à 21, **caractérisé en ce que** le corps de base (G) comprend au moins une deuxième baguette (2') s'étendant longitudinalement dans une direction x, présentant dans une direction y une largeur (B') et surélevée dans une direction z, avec une surface de travail finale plane, qui comprend une pluralité d'encoches (3') s'étendant parallèlement dans la direction y et approfondies à partir de la surface de travail dans la direction z, qui définit une pluralité de surfaces de surfaces (4'), la dimension longitudinale des encoches (3') dans la direction x étant > 1,0 mm à 10,0 mm et la dimension longitudinale des surfaces de soudure (4') dans la direction x étant de 1,0 mm à 10,0 mm, l'au moins une deuxième baguette (2') étant disposée parallèlement dans la direction x et à une distance (d) par rapport à l'au moins une première baguette (2) et la surface de travail de l'au moins une deuxième baguette (2') présentant la même dimension dans la direction z que celle de l'au moins une première baguette (2).

23. Outil (1) selon la revendication précédente, **caractérisé en ce que**, entre la première baguette (2) et la deuxième baguette (2') se trouve au moins une troisième baguette (2") surélevée dans la direction z, avec une surface de travail finale plane dans la direction z, avec des évidements (3") s'étendant dans la direction z, qui définit une pluralité de surfaces de soudure (4"), la surface de travail de l'au moins une troisième baguette (2") présente la même dimension dans la direction z que celle de l'au moins une première baguette (2).

24. Installation de soudure par ultrasons, comprenant un outil (1) selon l'une des revendications 14 à 23 et au moins une sonotrode, la sonotrode et l'outil (1) étant disposés l'un par rapport à l'autre de façon à ce que, lors du processus de soudure, la sonotrode et l'au moins une première baguette (2), le cas échéant l'au moins une deuxième baguette (2') et le cas échéant I' au moins une troisième baguette (2") soient superposées ou
une enclume avec une surface de travail continue et un outil (1) selon l'une des revendications 12 à 23, qui est utilisé comme une sonotrode, l'enclume et l'outil (1) étant disposés de manière mobile l'un par rapport à l'autre de façon à ce que, lors du processus de soudure, l'enclume et l'au moins une première baguette (2), le cas échéant I' au moins une deuxième baguette (2') et le cas échéant l'au moins une troisième baguette (2") soient superposées.
